# EUROPEAN PATENT APPLICATION

(11) **EP 4 358 529 A1**
(43) Date of publication of application: **24.04.2024**
(21) Application number: 23805851.5
(22) Date of filing: 26.07.2023
(51) Int. Cl.: H04N 23/62, H04N 23/667, H04N 23/69, H04N 23/57, H04M 1/02

(54) **ELECTRONIC DEVICE FOR CONTROLLING PHOTOGRAPHY COMPOSITION AND CONTROL METHOD THEREFOR**

(30) Priority: 29.08.2022 KR 20220108526; 30.09.2022 KR 20220125485
(71) Applicant: Samsung Electronics Co., Ltd., Suwon-si, Gyeonggi-do 16677 (KR)
(72) Inventor: SHEEN, Saebyuk, Suwon-si Gyeonggi-do 16677 (KR); KIM, Jiyoun, Suwon-si Gyeonggi-do 16677 (KR); KIM, Jiwon, Suwon-si Gyeonggi-do 16677 (KR); JI, Youngmin, Suwon-si Gyeonggi-do 16677 (KR)
(74) Representative: Nederlandsch Octrooibureau
(86) International application number: PCT/KR2023/010845
(87) International publication number: WO 2024/049014

(57) **Abstract**

Provided are an electronic device for controlling a shooting composition and a control method thereof. The electronic device may include a camera module configured to obtain an image with respect to a subject, a processor, at least one memory configured to store instructions executable by the processor, and a flexible display module configured to expand or contract a screen on which the image is output according to a rolling state of a display. In response to the instructions being executed by the processor, the processor may be configured to determine whether there is a change in the rolling state, when there is the change in the rolling state and a current image composition adjustment mode is a manual mode, receive, from a user, an input about selection for image composition adjustment, when the current image composition adjustment mode is an automatic mode, detect a blank based on a subject and adjust a composition of the subject based on the blank, and control a blank size of the obtained image based on the selection in the manual mode or the adjusted composition of the subject in the automatic mode.

## Description

### TECHNICAL FIELD

The disclosure relates to an electronic device for controlling a shooting composition and a control method of controlling the electronic device.

### BACKGROUND ART

The development of electronics technology has accelerated the development and distribution of electronic products of various types. For example, in parallel with the development of a foldable electronic device or a rollable electronic device, researchers have been conducting research on electronic devices deformable into a form suitable for users' environment according to their needs.

### DISCLOSURE

### TECHNICAL SOLUTION

According to an embodiment, an electronic device for controlling a shooting composition includes a camera module configured to obtain an image of a subject. The electronic device may further include a processor. The electronic device may further include at least one memory configured to store instructions executable by the processor. The electronic device may further include a flexible display module configured to expand or contract a screen on which the image is output according to a rolling state of a display. When the instructions are executed by the processor, the processor may be configured to determine whether there is a change in the rolling state, when there is the change in the rolling state and a current image composition adjustment mode is a manual mode, receive, from a user, an input about selection for image composition adjustment, when the current image composition adjustment mode is an automatic mode, detect a blank based on the subject and adjust a composition of the subject based on the blank, and control a blank size of the obtained image based on the selection in the manual mode or the adjusted composition of the subject in the automatic mode.

According to an embodiment, a control method of controlling an electronic device for controlling a shooting composition includes determining whether there is a change in a rolling state of the electronic device. The control method may further include, upon the change in the rolling state, receiving an input about selection for image composition adjustment from a user when there is the change in the rolling state and a current image composition adjustment mode is a manual mode, and detecting a blank based on a subject and adjusting a composition of the subject based on the blank when the current image composition adjustment mode is an automatic mode. The control method may further include controlling a blank size of an obtained image based on the selection in the manual mode or the adjusted composition of the subject in the automatic mode.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 is a block diagram illustrating an electronic device in a network environment according to an embodiment;
FIGS. 2A and 2B are views illustrating a front view and a rear view of an electronic device in a first state, respectively, according to an embodiment;
FIGS. 2C and 2D are views illustrating a front view and a rear view of the electronic device in a second state, respectively, according to an embodiment;
FIG. 3 is a flowchart illustrating a control method when an image composition adjustment mode of the electronic device for controlling a shooting composition is a manual mode, according to an embodiment;
FIG. 4 is a flowchart illustrating a control method when an image composition adjustment mode of the electronic device for controlling a shooting composition is an automatic mode, according to an embodiment;
FIGS. 5 and 6 are diagrams further illustrating embodiments of automatically adjusting a blank around a subject in the case of a change in a rolling state when an image composition adjustment mode of an electronic device is an automatic mode, according to an embodiment;
FIG. 7 is a diagram illustrating an embodiment in which a user manually adjusts a blank around a subject in an electronic device according to an embodiment;
FIG. 8 is a diagram illustrating an embodiment of deleting a background area excluding a subject in an electronic device according to an embodiment;
FIG. 9 is a diagram illustrating an embodiment of manually adjusting a blank around a subject during rolling in/out upward/downward in an electronic device according to an embodiment;
FIGS. 10A and 10B are diagrams further illustrating embodiments of manually adjusting a blank around a subject in an electronic device according to an embodiment;
FIG. 11 is a diagram illustrating an embodiment of automatically adjusting a blank around a subject in an electronic device according to an embodiment;
FIG. 12 is a diagram illustrating an embodiment of automatically adjusting a blank around a subject during rolling in/out left/right in an electronic device according to an embodiment;
FIG. 13 is a diagram illustrating an embodiment of manually selecting a subject including a plurality of objects in an electronic device according to an embodiment;
FIG. 14 is a diagram illustrating an embodiment of automatically selecting a plurality of subjects and automatically selecting blanks around the plurality of subjects in an electronic device according to an embodiment;
FIG. 15 is a diagram illustrating an embodiment of manually selecting subjects and manually selecting blanks around the subjects in an electronic device according to an embodiment; and
FIG. 16 is a diagram illustrating an embodiment of controlling an obtained image based on the file size, resolution, focus, and illuminance of the obtained image in an electronic device according to an embodiment.

### BEST MODE FOR PRACTICING INVENTION

With the recent development of electronics technology, there may be a high expectation for the wide use of an electronic device including a flexible display that extends or reduces the screen of the electronic device within a certain range. Accordingly, there may be a growing need for research for the greater experience of a user using the electronic device. For example, when a user takes a picture with an electronic device, the user may need to change a rolling state of the flexible display of the electronic device into roll-in or roll-out, according to a situation. In this case, the change in the rolling state of the flexible display may change the composition of a subject obtained through a camera module and accordingly, the user may experience the inconvenience of having to re-adjust the composition intended in a previous rolling state to the changed rolling state. A subject movement and a change in a view angle due to the change in the composition may appear more prominently when a subject is shot at a short distance (e.g., within 50 cm) in daily life than when the subject is shot at a long distance.

Therefore, there may be a need for a method of maintaining a composition intended by a user even when there is a change in the rolling state of a flexible display in the process of obtaining an image including a subject by using a camera module.

Disclosed are an electronic device and control method for quickly and smoothly obtaining an image including a subject according to a subject composition originally intended by a user even when a rolling state of a flexible display changes. For example, when a user intends to maintain a specific blank around a subject, the electronic device may change the rolling state of the flexible display of roll-in or the rolling state of flexible display of roll-out while maintaining the specific blank and may provide an optimal composition by maintaining blanks below or above the subject as intended by the user. When an image composition adjustment mode is a manual mode, the electronic device may control an image composition based on a user's input about selection for image composition adjustment. When the image composition adjustment mode is an automatic mode, the electronic device may detect a blank based on a subject, adjust the composition of the subject based on the blank, and control the composition of an obtained image.

Hereinafter, embodiments will be described in detail with reference to the accompanying drawings. When describing the embodiments with reference to the accompanying drawings, like reference numerals refer to like constituent elements and a repeated description related thereto will be omitted.

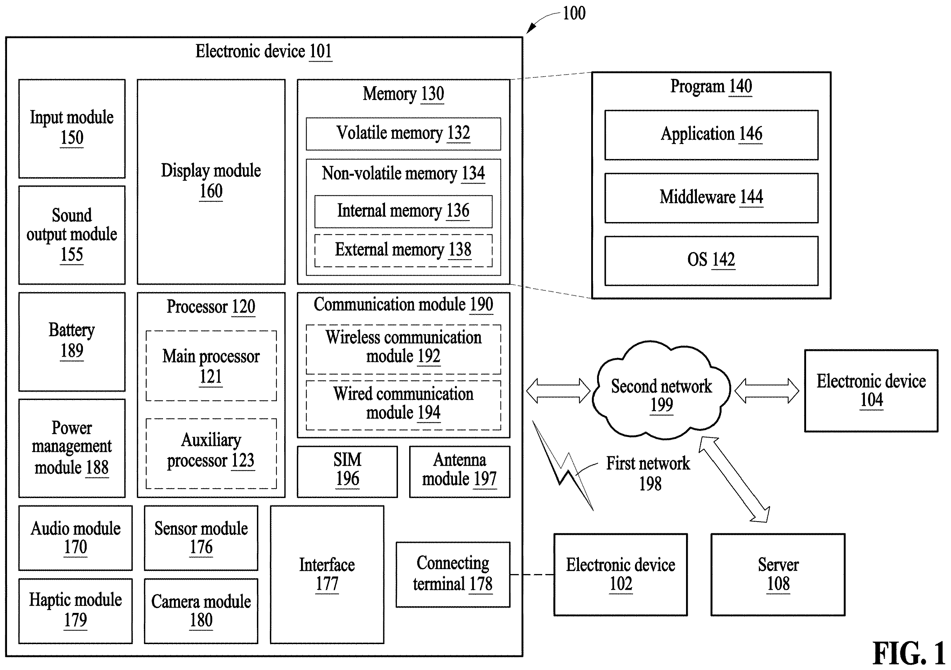

FIG. 1 is a block diagram illustrating an electronic device in a network environment according to an embodiment.

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an example embodiment, the electronic device 101 may communicate with the electronic device 104 via the server 108. According to an example embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to an example embodiment, as at least a part of data processing or computation, the processor 120 may store a command or data received from another component (e.g., the sensor module 176 or the communication module 190) in a volatile memory 132, process the command or the data stored in the volatile memory 132, and store resulting data in a nonvolatile memory 134. According to an example embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an example embodiment, the auxiliary processor 123 (e.g., an image signal processor (ISP) or a CP) may be implemented as a portion of another component (e.g., the camera module 180 or the communication module 190) that is functionally related to the auxiliary processor 123. According to an example embodiment, the auxiliary processor 123 (e.g., an NPU) may include a hardware structure specified for artificial intelligence model processing. An artificial intelligence (AI) model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the nonvolatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an example embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to an example embodiment, the display module 160 may include a touch sensor adapted to sense a touch, or a pressure sensor adapted to measure the intensity of force applied by the touch. The display module 160 may apply, to an output screen, a screen setting value corresponding to the current folded state of the display among a plurality of predefined screen setting values (e.g., screen rotation, a screen refresh rate, an always on display (AOD) screen, text to be displayed on a screen).

The audio module 170 may convert a sound into an electric signal or vice versa. According to an example embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to an example embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, a Hall sensor, or an illuminance sensor.

The interface 177 may support one or more specified protocols to be used for the electronic device 101 to be coupled with the external electronic device (e.g., the electronic device 102) directly (e.g., by wire) or wirelessly. According to an example embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an example embodiment, the haptic module 179 may include, for example, a motor, a piezoelectric element, or an electric stimulator.

The camera module 180 may capture a still image and moving images. According to an example embodiment, the camera module 180 may include one or more lenses, image sensors, ISPs, or flashes.

The power management module 188 may manage power supplied to the electronic device 101. According to an example embodiment, the power management module 188 may be implemented as, for example, at least a part of a power management integrated circuit (PMIC).

The battery 189 may supply power to at least one component of the electronic device 101. According to an example embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102 and 104, and the server 108) and performing communication via the established communication channel. The communication module 190 may include one or more communication processors that are operable independently of the processor 120 (e.g., an AP) and that support a direct (e.g., wired) communication or a wireless communication. According to an example embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an example embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an example embodiment, the antenna module 197 may include an antenna including a radiating element including a conductive material or a conductive pattern formed in or on a substrate (e.g., a printed circuit board (PCB)). According to an example embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an example embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example embodiment, commands or data may be transmitted or received between the electronic device 101 and the external electronic device 104 via the server 108 coupled with the second network 199. Each of the external electronic devices 102 or 104 may be the same in type as electronic device 101 or different in type than electronic device 101. According to an example embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may transmit a request to one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example embodiment, the external electronic device 104 may include an Internet-of-things (IoT) device. The server 108 may be an intelligent server using machine learning and/or a neural network. According to an example embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to an embodiment may be one of various types of electronic devices. The electronic device may include, for example, a portable communication device (e.g., a smartphone), a computer device, a portable multimedia device, a portable medical device, a camera, a wearable device, or a home appliance device. According to an example embodiment of the disclosure, the electronic device is not limited to those described above.

It should be understood that an embodiment of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "1st", "2nd", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example embodiment, the module may be implemented in a form of an application-specific integrated circuit (ASIC).

An embodiment as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

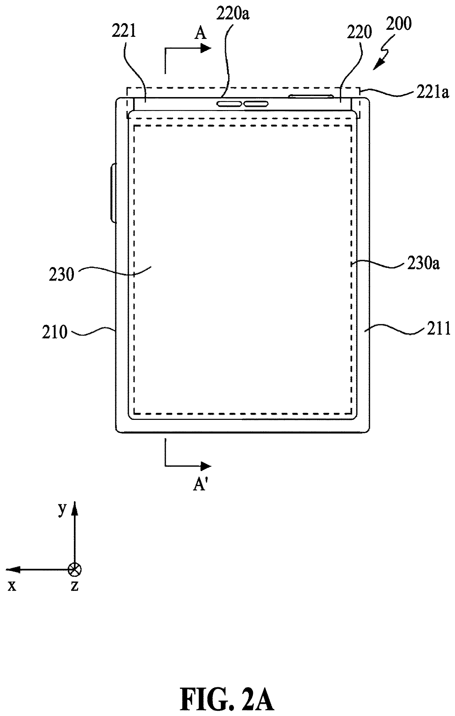

An electronic device (e.g., the electronic device 100 of FIG. 1 or an electronic device 200 of FIGS. 2A to 2D) for controlling a shooting composition according to an embodiment may include a camera module (e.g., the camera module 180 of FIG. 1) configured to obtain an image of a subject. The electronic device may further include a processor (e.g., the processor 120 of FIG. 1). The electronic device may further include at least one memory (e.g., the memory 130 of FIG. 1) configured to store instructions to be executable by the processor. The electronic device may further include a flexible display module (e.g., the display module 160 of FIG. 1) configured to expand or contract a screen on which the image is output according to a rolling state of a display. When the instructions are executed by the processor, the processor may be configured to determine whether there is a change in the rolling state, when there is the change in the rolling state and a current image composition adjustment mode is a manual mode, receive, from a user, an input about selection for image composition adjustment, when the current image composition adjustment mode is an automatic mode, detect a blank based on the subject and adjust a composition of the subject based on the blank, and control a blank size of the obtained image based on the selection in the manual mode or the adjusted composition of the subject in the automatic mode.

When the current image composition adjustment mode is the automatic mode, the processor (e.g., the processor 120 of FIG. 1) may be configured to control the blank size of the obtained image by adjusting a lens zoom ratio of the camera module.

When the current image composition adjustment mode is the automatic mode, the processor (e.g., the processor 120 of FIG. 1) may be configured to detect the subject before the change in the rolling state and adjust the lens zoom ratio of the camera module 180 after the change in the rolling state based on a composition of the subject before the change in the rolling state.

When the current image composition adjustment mode is the automatic mode, the processor (e.g., the processor 120 of FIG. 1) may be configured to detect a ratio of the subject and a ratio of a blank before the change in the rolling state and adjust the lens zoom ratio of the camera module 180 after the change in the rolling state based on the ratio of the subject and the ratio of the blank before the change in the rolling state.

When the current image composition adjustment mode is the automatic mode, the processor (e.g., the processor 120 of FIG. 1) may be configured to control the blank size of the obtained image by changing a lens of the camera module.

When the current image composition adjustment mode is the manual mode, the processor (e.g., the processor 120 of FIG. 1) may be configured to control the blank size of the obtained image based on a blank area selected by the user.

The blank area selected by the user may be at least one of a blank area selected by the user in a predefined form, a blank area detected and provided by the processor 120, and a blank area selected by the user in a free form.

The blank area selected by the user in the predefined form may be at least one of an upper blank of the subject, a lower blank of the subject, a left blank of the subject, and a right blank of the subject.

The processor (e.g., the processor 120 of FIG. 1) may be configured to control the blank size of the obtained image based on a predefined blank composition.

The processor (e.g., the processor 120 of FIG. 1) may be further configured to provide a function of controlling the obtained image based on at least one of a file size of the obtained image, resolution of the obtained image, focus of the obtained image, and illumination of the obtained image.

The subject may be obtained by a user selecting a subject of a plurality of objects detected and provided by a processor (e.g., the processor 120 of FIG. 1).

The subject may be obtained by the processor 120 (e.g., the processor 120 of FIG. 1) selecting a subject of a plurality of objects.

The processor (e.g., the processor 120 of FIG. 1) may be configured to select the subject of the plurality of objects based on at least one of a distance of the subject from the electronic device (e.g., the electronic device 100 of FIG. 1 and an electronic device 200 of FIGS. 2A to 2D) and an area of the subject.

The processor (e.g., the processor 120 of FIG. 1) may be further configured to delete a background area other than the subject.

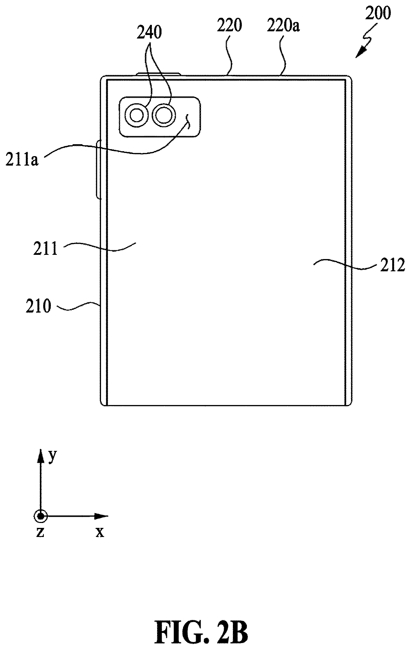

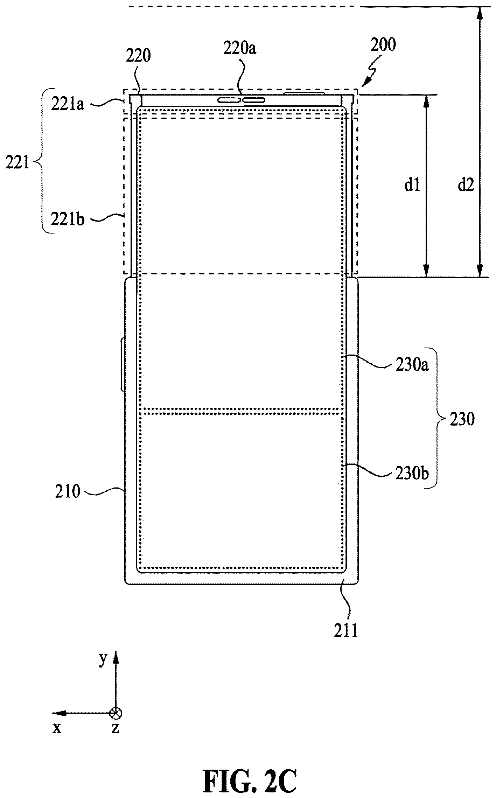

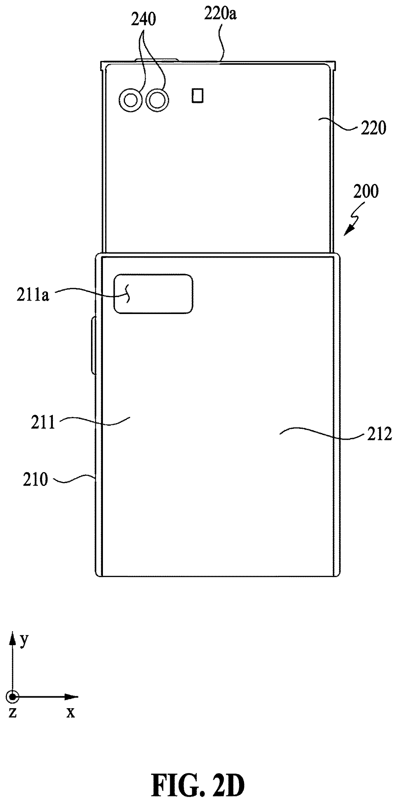

FIGS. 2A and 2B are views illustrating a front view and a rear view of an electronic device in a first state, respectively, according to an embodiment. FIGS. 2C and 2D are views illustrating a front view and a rear view of the electronic device in a second state, respectively, according to an embodiment.

Referring to FIGS. 2A to 2D, an electronic device 200 (e.g., the electronic device 101 of FIG. 1) according to an embodiment may include a first housing 210, a second housing 220, a display 230 (e.g., the display module 160 of FIG. 1), and a camera 240 (e.g., the camera module 180 of FIG. 1). According to an embodiment, the second housing 220 may be slidable with respect to the first housing 210. For example, the second housing 220 may move within a specified distance range in a first direction (e.g., +y direction) with respect to the first housing 210. When the second housing 220 moves in the first direction, a distance between the first housing 210 and a side surface 220a of the second housing 220 facing the first direction may increase. In another example, the second housing 220 may move within a specified distance range in a second direction (e.g., -y direction) opposite to the first direction with respect to the first housing 210. When the second housing 220 moves in the second direction, the distance between the first housing 210 and the side surface 220a of the second housing 220 facing the first direction may decrease. According to an embodiment, the second housing 220 may be relatively slidable with respect to the first housing 210 and may thus linearly reciprocate with respect to the first housing 210. For example, at least a portion of the second housing 220 may be inserted into the first housing 210 or withdrawn from the first housing 210.

According to an embodiment, the electronic device 200 may be referred to as a "slidable electronic device" since the second housing 220 is designed to be slidable with respect to the first housing 210. According to an embodiment, the electronic device 200 may be referred to as a "rollable electronic device" since at least a portion of the display 230 is designed to be rolled inside the second housing 220 (or the first housing 210) based on the sliding movement of the second housing 220.

According to an embodiment, a first state of the electronic device 200 may be defined as a state in which the second housing 220 moves in the second direction (e.g., a contracted state or a slide-in state). For example, in the first state of the electronic device 200, the second housing 220 may not be substantially movable in the second direction. In the first state of the electronic device 200, the distance between the side surface 220a of the second housing 220 and the first housing 210 may not decrease. In another example, in the first state of the electronic device 200, a portion of the second housing 220 may not be inserted into the first housing 210. According to an embodiment, the first state of the electronic device 200 may be a state in which a second area 230b of the display 230 is not visually exposed from the outside of the electronic device 200. For example, in the first state of the electronic device 200, the second area 230b of the display 230 may be inside an internal space (not shown) formed by the first housing 210 and/or the second housing 220 and may thus not be visible from the outside of the electronic device 200.

According to an embodiment, a second state of the electronic device 200 may be defined as a state in which the second housing 220 moves in the first direction (e.g., a withdrawn state or a slide-out state). For example, in the second state of the electronic device 200, the second housing 220 may not be substantially movable in the first direction. In the second state of the electronic device 200, the distance between the first housing 210 and the side surface 220a of the second housing 220 may not increase. In another example, in the second state of the electronic device 200, a portion of the second housing 220 may not be withdrawn from the first housing 210. According to an embodiment, the second state of the electronic device 200 may be a state in which the second area 230b of the display 230 is visually exposed from the outside of the electronic device 200. For example, in the second state of the electronic device 200, the second area 230b of the display 230 is withdrawn from the internal space of the electronic device 200 and visible from the outside of the electronic device 200.

According to an embodiment, when the second housing 220 moves in the first direction from the first housing 210, at least a portion of the second housing 220 and/or the second area 230b of the display 230 may be withdrawn from the first housing 210 by a drawn length d1 corresponding to the moving distance of the second housing 220. According to an embodiment, the second housing 220 may move within a designated distance d2. According to an embodiment, the drawn length d1 may have a size ranging from approximately 0 to the designated distance d2.

According to an embodiment, the state of the electronic device 200 may be convertible between the second state and the first state by a manual operation of a user or by an automatic operation of a driving module (not shown) that is inside the first housing 210 or the second housing 220. According to an embodiment, an operation of the driving module may be triggered based on a user's input. According to an embodiment, the user's input for triggering the operation of the driving module may include a touch input, a force touch input, and/or a gesture input, through the display 230. According to another embodiment, the user's input for triggering the operation of the driving module may include a voice input or an input of a physical button exposed to the outside of the first housing 210 or the second housing 220. According to an embodiment, the driving module may be driven in a semi-automatic mode in which an operation is triggered upon detection of a manual manipulation by a user's external force.

According to an embodiment, the first state of the electronic device 200 may be referred to as a first shape and a second state of the electronic device 200 may be referred to as a second shape. For example, the first shape may include a normal state, a reduced state, or a closed state and the second shape may include an opened state. According to an embodiment, the electronic device 200 may form a third state (e.g., an intermediate state) between the first state and the second state. For example, the third state may be referred to as a third shape, and the third shape may include a free stop state.

According to an embodiment, the display 230 may be visible or viewable from the outside in a front direction (e.g., -z direction) of the electronic device 200 so as to display visual information to the user. For example, the display 230 may include a flexible display. According to an embodiment, at least a portion of the display 230 may be in the second housing 220 and may be withdrawn from the internal space (not shown) of the electronic device 200 according to the movement of the second housing 220 or may be inserted into the internal space of the electronic device 200. The internal space of the electronic device 200 may be formed by combining the first housing 210 with the second housing 220 and may refer to an internal space of the first housing 210 and the second housing 220. For example, in the first state of the electronic device 200, at least a portion of the display 230 may be rolled into the internal space of the electronic device 200 and inserted into the internal space of the electronic device 200. When the second housing 220 moves in the first direction in a state where at least a portion of the display 230 is inserted into the internal space of the electronic device 200, at least a portion of the display 230 may be withdrawn from the internal space of the electronic device 200. In another example, when the second housing 220 moves in the second direction, at least a portion of the display 230 may be rolled into the electronic device 200 and may thus be inserted into the internal space of the electronic device 200. According to the insertion or withdrawal of at least a portion of the display 230, an area of the display 230 visible from the outside of the electronic device 200 may be expanded or reduced. According to an embodiment, the display 230 may include a first area 230a and the second area 230b.

According to an embodiment, the first area 230a of the display 230 may be an area visible from the outside of the electronic device 200 regardless of whether the electronic device 200 is in the second state or the first state. For example, the first area 230a may refer to a partial area of the display 230 that is not rolled into the internal space of the electronic device 200. According to an embodiment, when the second housing 220 moves, the first area 230a may move together with the second housing 220. For example, when the second housing 220 moves in the first direction or the second direction, the first area 230a may move along with the second housing 220 on the front surface of the electronic device 200 in the first direction or the second direction.

According to an embodiment, the second area 230b of the display 230 may be inserted into the internal space of the electronic device 200 or be withdrawn from the internal space of the electronic device 200 according to the movement of the second housing 220. For example, in the first state of the electronic device 200, at least a portion of the second area 230b of the display 230 may be inserted into the internal space of the electronic device 200 in a state where at least the portion of the second area 230b of the display 230 is rolled. In the first state of the electronic device 200, the second area 230b of the display 230 may be inserted into the internal space of the electronic device 200 and may not be visible from the outside. In another example, the second area 230b of the display 230 may be withdrawn from the internal space of the electronic device 200 in the second state of the electronic device 200. The second area 230b of the display 230 may be visible from the outside of the electronic device 200 in the second state.

According to an embodiment, in the first state of the electronic device 200, the visible area of the display 230 from the outside of the electronic device 200 may include only the first area 230a of the display 230. In the second state of the electronic device 200, the visible area of the display 230 from the outside of the electronic device 200 may include the first area 230a and at least a portion of the second area 230b of the display 230.

According to an embodiment, the first housing 210 of the electronic device 200 may include a first support member 211 surrounding the inner space of the first housing 210, a rear plate 212 surrounding the rear surface of the first support member 211, and a first side member surrounding at least a portion of the edge of the first support member 211. According to an embodiment, the first support member 211 may be integrally formed with the first side member. The first support member 211 may extend into the inside of the electronic device 200 from at least a portion of one surface of the first side member facing the inside of the electronic device 200. According to an embodiment, the first support member 211 may be integrally formed with or made of the same material as the first side member.

According to an embodiment, the second housing 220 of the electronic device 200 may include a second support member 221 surrounding the inner space of the electronic device 200 and a second side member.

According to an embodiment, the second side member may form at least a portion of the side surface of the second housing 220. The second support member 221 may support an electronic component (e.g., the camera 240 and/or a PCB 224) in the second housing 220. The second side member may surround at least a portion of the second support member 221. According to an embodiment, the second support member 221 may be integrally formed with the second side member. The second support member 221 may extend into the inside of the second housing 220 from at least a portion of one surface of the second side member facing the inside of the second housing 220. According to an embodiment, the second support member 221 may be integrally formed or made of the same material as the second side member.

According to an embodiment, the second support member 221 may include a first cover area 221a of the second support member 221, which is not inserted into the inside of the first housing 210, and a second cover area 221b, which is inserted into or withdrawn from the inside of the first housing 210. The first cover area 221a of the second support member 221 may always be visible regardless of whether the electronic device 200 is in the second state or the first state. According to an embodiment, at least a portion of the first cover area 221a of the second support member 221 may form the side surface 220a of the second housing 220. According to an embodiment, the second cover area 221b of the second housing 220 may not be visible in the first state but may be visible in the second state.

The camera 240 may obtain an image of a subject based on light received from the outside of the electronic device 200. According to an embodiment, the camera 240 may include one or more lenses, an image sensor, and/or an ISP. According to an embodiment, the camera 240 may be in the second housing 220 to face the rear surface of the electronic device 200, which is opposite to the front surface of the electronic device 200 having the first area 230a of the display 230. For example, the camera 240 may be on the second support member 221 of the second housing 220 and may be visible from the outside of the electronic device 200 through an opening 211a in the first support member 211, when the electronic device 200 is in the first state. In another example, the camera 240 may be on the second support member 221 of the second housing 220 and may not be visible from the outside the electronic device 200 as the camera 240 is covered by the first support member 211 and/or the rear plate 212, when the electronic device 200 is in the first state.

According to an embodiment, the camera 240 may include a plurality of cameras. For example, the camera 240 may include a wide-angle camera, an ultra wide-angle camera, a telephoto camera, a proximity camera, and/or a depth camera. However, the camera 240 may not be necessarily limited to including a plurality of cameras and may include one camera.

According to an embodiment, the camera 240 may further include a camera (not shown) that is directed toward the front surface of the electronic device 200, where the first area 230a of the display 230 is. When the camera 240 is directed toward the front surface of the electronic device 200, the camera 240 may be an under display camera (UDC) positioned under the display 230 (e.g., in the +z direction from the display 230) but is not limited thereto.

According to an embodiment, the electronic device 200 may include a sensor module (not shown) and/or a camera module (not shown) under the display 230. The sensor module may detect an external environment based on information (e.g., light) received through the display 230. According to an embodiment, the sensor module may include at least one of a receiver, a proximity sensor, an ultrasonic sensor, a gesture sensor, a gyro sensor, an atmospheric pressure sensor, a magnetic sensor, an acceleration sensor, a grip sensor, a color sensor, an IR sensor, a biometric sensor, a temperature sensor, a humidity sensor, a motor encoder, and an indicator. According to an embodiment, at least some sensor modules of the electronic device 200 may be visually exposed to the outside through a partial area of the display 230. According to an embodiment, the electronic device 200 may sense a withdrawn length (e.g., the length d1) by using the sensor module. According to an embodiment, the electronic device 200 may generate withdrawal information about a withdrawal extent sensed by a sensor. For example, the electronic device 200 may use the withdrawal information so as to sense and/or check how long the second housing 220 is withdrawn. According to an embodiment, the withdrawal information may include information about the withdrawn length of the second housing 220.

According to an embodiment, the form of coupling the first housing 210 to the second housing 220 is not limited to the form and combination shown in FIGS. 2A to 2D and may be implemented by another form or a combination and/or a connection of other components.

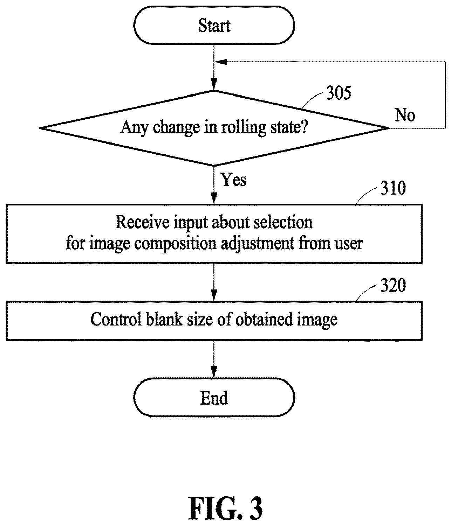

FIG. 3 is a flowchart illustrating a control method when an image composition adjustment mode of the electronic device for controlling a shooting composition is a manual mode, according to an embodiment.

Referring to FIG. 3, in operation 305 according to an embodiment, an electronic device may determine whether there is a change in a rolling state of the flexible display of the electronic device. The electronic device may determine whether there is a change in the rolling state of the electronic device based on a sensor module. The determining of whether there is the change in the rolling state may include determining whether the flexible display is rolled in from the outside or rolled out from the inside.

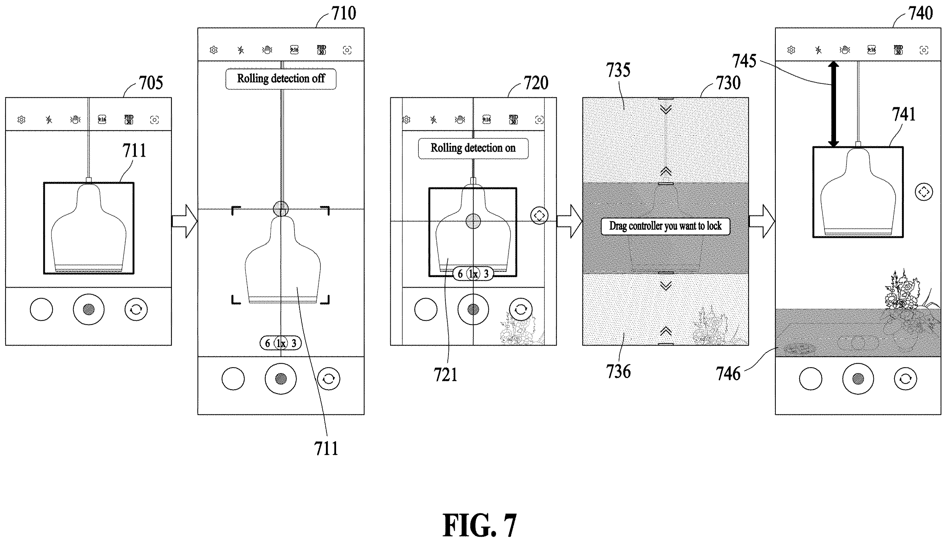

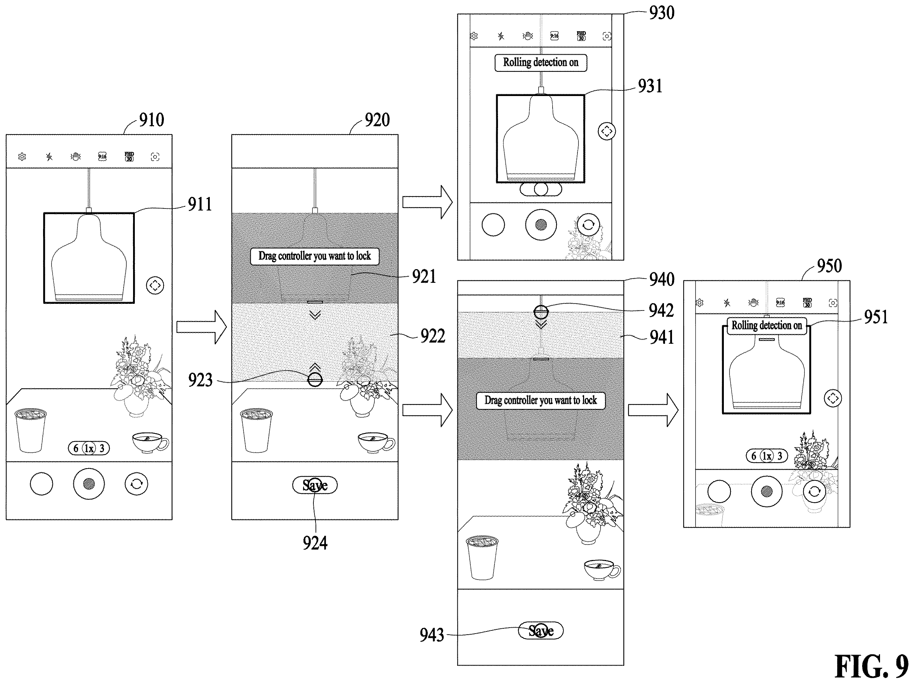

When an image composition adjustment mode of the electronic device according to an embodiment is a manual mode, in operation 310, the electronic device may receive, from a user, an input about selection (e.g., a region of interest (ROI) selection or a blank selection) for image composition adjustment. In operation 320, the electronic device may control the blank size of the image obtained in operation 310 based on the user's input about the selection. A selected blank may be, for example, an upper blank 735 or a lower blank 736 of FIG. 7. The controlling of the blank size the obtained image may include maintaining directions of a subject and a blank around the subject and a distance therebetween before and after a change in the rolling state of the flexible display. The controlling of the blank size of the image obtained in operation 320 according to an embodiment may include, for example, controlling the blank size of the obtained image, as in an image 950 including a subject 951, based on a lower blank 922 selected by a user from an image 920 of FIG. 9 and an upper blank 942 selected by the user from an image 940 of FIG. 9.

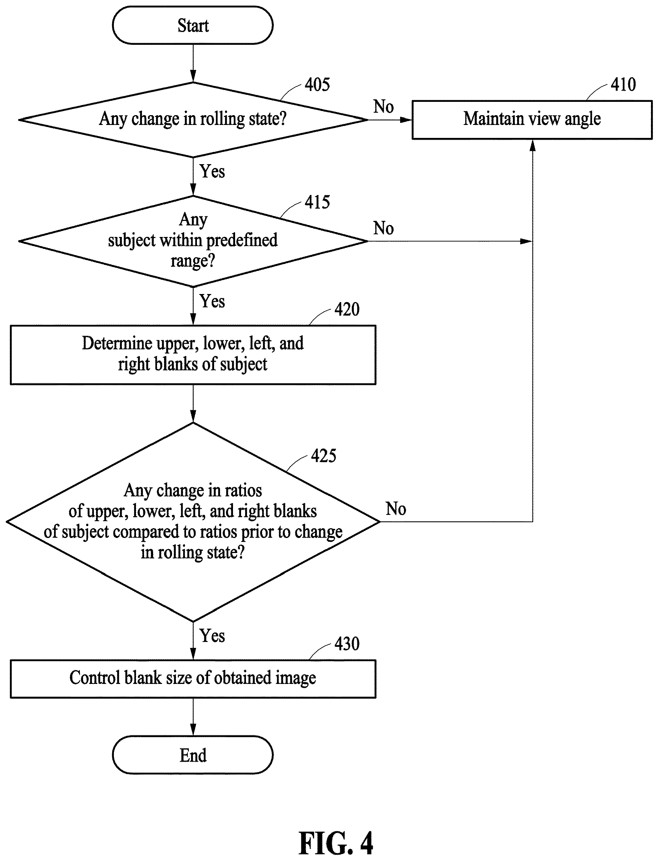

A control method of an electronic device (e.g., the electronic device 100 of FIG. 1 and the electronic device 200 of FIGS. 2A to 2D) for controlling a shooting composition according to an embodiment may include an operation (e.g., the operation 305 of FIG. 3 and an operation 405 of FIG. 4) of determining whether there is a change in a rolling state of the flexible display of the electronic device (e.g., the electronic device 100 of FIG. 1 and the electronic device 200 of FIGS. 2A to 2D). When there is a change in the rolling state of the flexible display of the electronic device and a current image composition adjustment mode is a manual mode, the control method may further include receiving, from the user, an input about selection for image composition adjustment (e.g., operation 320 of FIG. 3). When the current image composition adjustment mode is an automatic mode, the control method may further include detecting a blank based on a subject and adjusting a subject composition based on the blank (e.g., operations 420, 425, and 430 of FIG. 4). The control method may further include controlling the blank size of the obtained image based on the selection in the manual mode or the adjusted subject composition in the automatic mode (e.g., operation 320 of FIG. 3 and operation 430 of FIG. 4).

The controlling of the blank size of the obtained image (e.g., operation 320 of FIG. 3 and operation 430 of FIG. 4) may include detecting a subject before the change in the rolling state and adjusting the lens zoom ratio of a camera module 180 after the change in the rolling state, based on a subject composition before the change in the rolling state.

The controlling of the blank size of the obtained image (e.g., operation 320 of FIG. 3 and operation 430 of FIG. 4) may include detecting the ratio of the subject and the ratios of blanks before the change in the rolling state and adjusting the lens zoom ratio of the camera module 180 after the change in the rolling state, based on the ratio of the subject and the ratios of the blanks before the change in the rolling state.

The controlling of the blank size of the obtained image (e.g., operation 320 of FIG. 3 and operation 430 of FIG. 4) may include controlling the blank size of the obtained image by changing lenses.

The control method may further include providing a function of controlling an image based on the file size, resolution, focus, and illumination of the obtained image.

FIG. 4 is a flowchart illustrating a control method when an image composition adjustment mode of the electronic device for controlling a shooting composition is an automatic mode, according to an embodiment.

Referring to FIG. 4, when an image composition adjustment mode of the electronic device according to an embodiment is an automatic mode, in operation 405 according to an embodiment, the electronic device may determine whether there is a change in the rolling state of the flexible display of the electronic device. The electronic device may determine whether there is a change in the rolling state of the electronic device based on a sensor module. In operation 410, when there is no change in the rolling state, the electronic device may maintain an existing view angle.

In operation 415 according to an embodiment, the electronic device may determine whether a main subject exists within a predefined range based on distance information obtained from a sensor included in a camera module. For example, the electronic device may determine the closest object to be a main subject based on the distance information obtained from the sensor included in the camera module. For example, the electronic device may determine, to be a main subject, an object occupying the greatest area in the image obtained from the sensor included in the camera module. For example, the electronic device may determine, to be a main subject, an object whose eyes, nose and mouth are seen most prominently in the image obtained from the sensor included in the camera module but the determining of the main subject by the electronic device is not limited to the embodiments described above. When the electronic device determines that the main subject does not exist in the obtained image, in operation 410, the electronic device may maintain the existing view angle.

In operation 420 according to an embodiment, when the main subject exists within a predefined range, the electronic device may detect at least one of the upper blank, the lower blank, the left blank, and the right blank of the main subject. In an embodiment, the detecting of the blank by the electronic device may include, for example, detecting, as a blank, an area having the longest distance among the upper, lower, left, and right areas based on a rectangle circumscribing the main subject. The detecting of the blank may include, for example, detecting, as a blank, an area in a preset direction among the upper, lower, left, and right areas based on the rectangle circumscribing the main subject. The detecting of the blank may include, for example, detecting, as a blank, at least one of the upper, lower, left, and right areas based on the rectangle circumscribing the main subject, based on a preset composition. The detecting of the blank may include, for example, detecting, as a blank, at least one of the upper, lower, left, and right areas having a difference in a color value including brightness and chroma by as much as a threshold value or greater, compared to the main subject. However, the detecting of the blank by the electronic device is not limited to the embodiments described above.

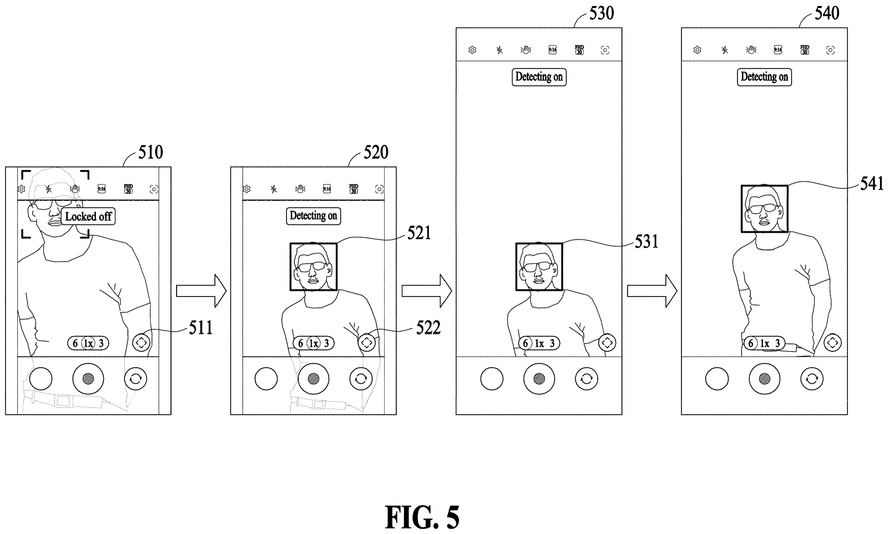

In operation 425 according to an embodiment, the electronic device may determine whether there is a change in at least one ratio of the upper, lower, left, and right areas compared to ratios prior to the change in the rolling state. In an embodiment, the determining of whether there is the change in the blank ratio by the electronic device may include, for example, detecting whether there is the change in the blank ratio when there is a difference between the at least one sensed ratio of the upper, lower, left, and right areas of the main subject in operation 420 and at least one sensed ratio of the upper, lower, left, and right areas of the main subject after the change in the rolling state. For example, when there is a change in at least one length of the upper, lower, left, and right blanks to the main subject, the electronic device may determine that there is a change in the blank ratio. For example, in the case of a change in the rolling state in an image 520 of FIG. 5, the electronic device may determine whether a ratio of a subject 521 to the upper blank in the image 520 has changed at the same ratio of a subject 531 to the upper blank of an image 530 of FIG. 5. For example, when the electronic device determines that there is no change in blank ratios, as in no change in the blank ratios between the image 520 of FIG. 5 and an image 540 of FIG. 5 having the blank size controlled after the change in the rolling state, the electronic device may maintain the view angle in operation 410.

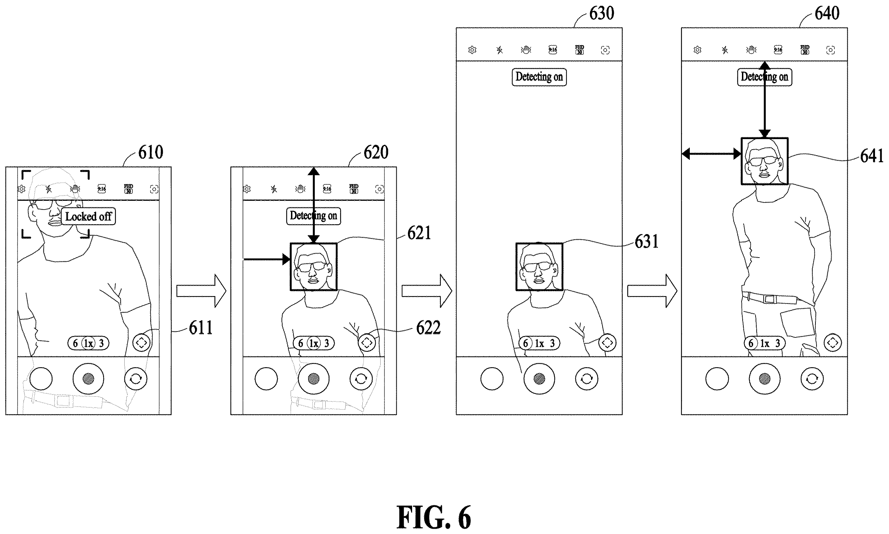

In operation 430 according to an embodiment, the electronic device may control the blank sizes of the obtained image. The electronic device may maintain ratios of blank sizes of an image, which is obtained by adjusting the lens zoom ratio of the camera module, at the same ratios of blank sizes of an image before the change in the rolling state. Alternatively, the electronic device may maintain ratios of blank sizes of an image, which is obtained by adjusting lenses of the camera module, at the same ratios of blank sizes of an image before the change in the rolling state. For example, the electronic device may maintain the ratio of a subject 641 to the left blank and the ratio of the subject 641 to the upper blank in an image 640 of FIG. 6 at the same ratio of a subject 621 to the left blank and the ratio of the subject 621 to the upper blank in an image 620 of FIG. 6, respectively.

FIGS. 5 and 6 are diagrams further illustrating embodiments of manually adjusting a blank around a subject in an electronic device according to an embodiment.

Referring to FIG. 5, when a current image composition adjustment mode is an automatic mode, the electronic device according to an embodiment may control blank sizes of an image obtained by adjusting a lens zoom ratio of a camera module. In an embodiment, the electronic device may detect a subject before a change in a rolling state of the flexible display and adjust a lens zoom ratio of the camera module after the change in the rolling state, based on a subject composition before the change in the rolling state of the flexible display. For example, the electronic device may determine an extent to which a subject is cropped by the change in the rolling state of the flexible display and may control the blank sizes of an image obtained by adjusting the lens zoom ratio of the camera module. In an embodiment, when a function button 511 for controlling the shooting composition of an image 510 is deactivated, due to the change in the rolling state of the flexible display, the electronic device may obtain an image irrespective of a shooting composition before the change in the rolling state. However, when a function button 522 for controlling the shooting composition is activated in an image 520, although the change in the rolling state of the flexible display may cause the electronic device to obtain an image, such as an image 530, having a different shooting composition from a shooting composition before the change in the rolling state of the flexible display, the electronic device may immediately control the blank sizes of the obtained image by adjusting the lens zoom ratio, as in an image 540. Through such immediate controlling, the ratios of blank sizes of the image 540 that is the obtained image after the change in the rolling state may remain the same as the ratios of blank sizes of the image 520 that is the image before the change in the rolling sate.

Referring to FIG. 6, when the current image composition adjustment mode is an automatic mode, the electronic device according to an embodiment may detect the ratio of the subject and the ratios of blanks before the change in the rolling state and may control the blank sizes of an image obtained by adjusting the lens zoom ratio of the camera module based on the ratio of the subject and the ratios of the blanks before the change in the rolling state. In an embodiment, when a function button 611 for controlling the shooting composition of an image 610 is deactivated, due to the change in the rolling state of the flexible display, the electronic device may obtain an image irrespective of a shooting composition before the change in the rolling state. However, when a function button 622 for controlling the shooting composition is activated as in an image 620, although the change in the rolling state of the flexible display may cause the electronic device to obtain an image, such as an image 630, having a different shooting composition from a shooting composition before the change in the rolling state of the flexible display, the electronic device may immediately control the blank sizes of the obtained image by adjusting the lens zoom ratio, based on the sensed ratio of a subject 641 and the sensed ratios of blanks in an image 640. Through such immediate controlling, the ratios of blank sizes of the image 640 that is the obtained image after the change in the rolling state may remain the same as the ratios of blank sizes of the image 620 that is the image before the change in the rolling sate.

FIG. 7 is a diagram illustrating an embodiment in which a user manually adjusts a blank around a subject in an electronic device according to an embodiment.

Referring to FIG. 7, in an embodiment, when a current image composition adjustment mode is a manual mode, an electronic device may control the blank size of an image based on a blank area selected by a user. For example, the user may obtain an image 705 including a subject 711 with a shooting composition control function deactivated. Thereafter, when the user rolls out the flexible display of the electronic device, the electronic device may obtain an image 710 including the subject 711. In this case, it may be seen that the subject 711 in the image 710 is lower than the subject 711 in the image 705 before the roll-out of the flexible display.

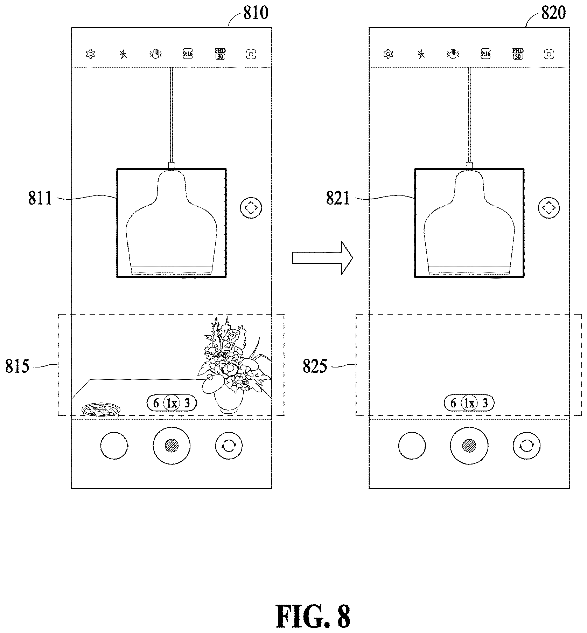

In the case of an image 720 obtained before the roll-out of the flexible display with the shooting composition control function activated, which is not similar to the images 705 and 710 with the shooting composition control function deactivated, the user may adjust an upper blank 735 and a lower blank 736 based on a subject 721 in an image 730. In an embodiment, when the user selects an upper blank 745 in an image 740, only a portion controlled by the user may be activated and the lower blank 736 in the image 730 may be deactivated. Subsequently, when the user rolls out the flexible display, although there is a change in the rolling state of the flexible display, the upper blank 735 selected by the user in the image 730 may be the same length as the upper blank 745 in the image 740. In this case, a background screen 746 in the image 740 may be obtained by the change in a folded state. A description of image processing of the background screen 746 follows in detail with reference to FIG. 8.

FIG. 8 is a diagram illustrating an embodiment of deleting a background area excluding a subject in an electronic device according to an embodiment.

Referring to FIG. 8, the electronic device according to an embodiment may delete a background area excluding a subject. For example, in a process of obtaining an image including a subject 811 in an image 810, a background screen 815 may be obtained by the roll-out of the flexible display of the electronic device. The electronic device may add a certain layer (e.g., a blank layer or a white layer) to areas detected as a sub-subject and a background screen or perform blur processing on the areas in a color similar to a surrounding area based on a color information value of the surrounding area. The sub-subject may be additionally detected by the camera module in addition to a subject to be mainly detected and obtained by the user through the camera module, and the background screen may refer to an area having a great color change value. Through the addition of the certain layer and the blur processing, the electronic device may provide a function of deleting the background and may thus provide an image 820 including a portion 825 where the background screen 815, which is obtained by the roll-out of the flexible display, is removed from the image 810. However, in the present disclosure, an embodiment of a method of deleting a background screen by an electronic device is not limited to the embodiment of the method described above.

FIG. 9 is a diagram illustrating an embodiment of manually adjusting a blank around a subject during rolling in/out upward/downward in an electronic device according to an embodiment.

Referring to FIG. 9, the electronic device according to an embodiment may control the blank size of an image based on a blank selected by a user. The blank selected by the user may be at least one of a blank selected by the user in a predefined form, a blank detected and provided by a processor, and a blank selected by the user in a free form. The blank selected by the user in the predefined form may be at least one of upper, lower, left, and right blanks of a subject. The electronic device according to an embodiment may provide a function of adjusting the size of a selected blank when the electronic device receives, from the user, selection for at least one of the upper, lower, right, and left blanks of the subject. The electronic device may adjust the selected blank around the subject based on the position and size of the blank selected by the user. For example, through the electronic device according to an embodiment, when a shooting composition control function is activated, the user may obtain an image 910 including a subject 911 before a change in a rolling state of the flexible display of the electronic device. Thereafter, when the flexible display is rolled out, the user may control and change the range of a lower blank 922 other than a subject area including a subject 921 in an image 920 by directly touching an icon 923 (e.g., an arrow, a pinch zoom, or a drag button) or through another input device. In an embodiment, the blank range selected by the user may appear on the display screen of the electronic device, for example, with a translucent layer added to the blank range, or in the form of a rectangle with only edges, but embodiments according to the present disclosure are limited thereto. The user may save the set range of the lower blank 922, for example, through a save button 924. Thereafter, when the flexible display is rolled in, the user may obtain an image 930 where a composition is adjusted while a positional relationship between a subject 931 and a lower blank in the downward direction remains the same as a positional relationship saved in the image 920 between the subject 921 and the lower blank 922 in the downward direction. In a state where a user obtains the image 920 with the flexible display rolled out, when the flexible display is rolled out again in a different direction from the previous one, the user may control and change the range of an upper blank 942 other than the subject area including the subject in an image 940 by directly touching an icon (e.g., an arrow, a pinch zoom, or a drag button) or through another input device. The user may save the set range of the upper blank 942 through a save button 943. Thereafter, the user may obtain an image 950 including a subject 951 while maintaining both the range of the lower blank 922 and the range of the upper blank 942 that are previously set.

When there is a plurality of subjects (not shown), for example, the electronic device may determine the closest object to be a main subject based on distance information obtained from a sensor included in a camera module. For example, the electronic device may determine, to be a main subject, an object occupying the greatest area in an image obtained from the sensor included in the camera module. For example, the electronic device may determine, to be a main subject, an object whose eyes, nose and mouth are seen most prominently in an image obtained from the sensor included in the camera module but the determining of the main subject by the electronic device is not limited thereto. Similar to the case where there is a single subject, when there is a change in the rolling state of the flexible display, the user may control and change the range of a blank other than a main subject area including a main subject in an image by directly touching an icon (e.g., an arrow, a pinch zoom, or a drag button) or through another input device.

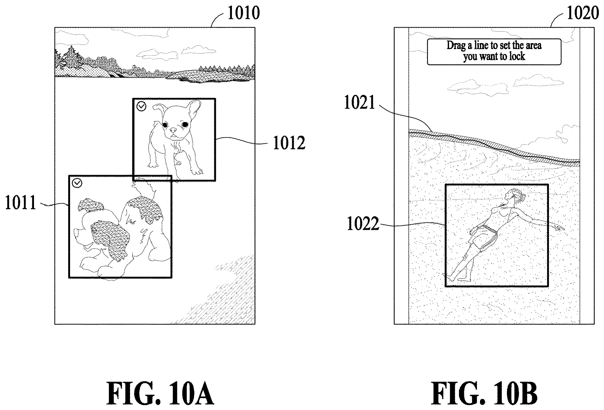

FIGS. 10A and 10B are diagrams further illustrating embodiments of manually adjusting a blank around a subject in an electronic device according to an embodiment.

Referring to FIGS. 10A and 10B, the electronic device according to an embodiment may provide a user with ROIs related to a plurality of subjects 1011 and 1012 detected in an image 1010. The user may select or not select the plurality of subjects 1011 and 1012 based on the ROIs, and the electronic device may designate, as a surrounding blank, an area other than the areas including the plurality of subjects 1011 and 1012 based on the ROIs. As shown in an image 1020 of FIG. 10B, the electronic device according to an embodiment may provide a user with various forms of ROIs 1021 and 1022 related to objects. In an embodiment, the various forms of ROIs may be, for example, a linear shape, a rectangular shape, a circular shape, or a star shape but are not limited thereto. The user may select a subject based on the various forms of the ROIs 1021 and 1022, and the electronic device may select, as a surrounding blank, an area other than the area including a subject selected by the user based on the various forms of the ROIs 1021 and 1022.

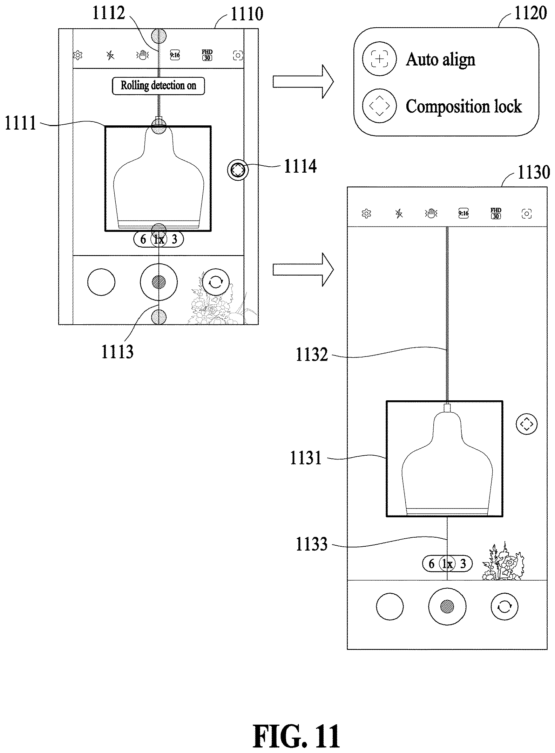

FIG. 11 is a diagram illustrating an embodiment of automatically adjusting a blank around a subject in an electronic device according to an embodiment.

Referring to FIG. 11, the electronic device according to an embodiment may control the blank size of an image based on a predefined blank composition. In the electronic device according to an embodiment, when a user obtains an image 1110 including a subject 1111 and presses an automatic blank function button 1114 with an upper distance 1112 and a lower distance 1113 maintained, the user may automatically control blanks around a subject through a setting window 1120 for an automatic blank adjustment function. In the case of automatically adjusting the blank around the subject, when the flexible display is rolled out, the user may obtain an image 1130 including a subject 1131. In the image 1130, the ratio of an upper distance 1132 and the ratio of a lower distance 1133 may be the same as the ratio of the upper distance 1112 and the lower distance 1113 in the image 1110, respectively.

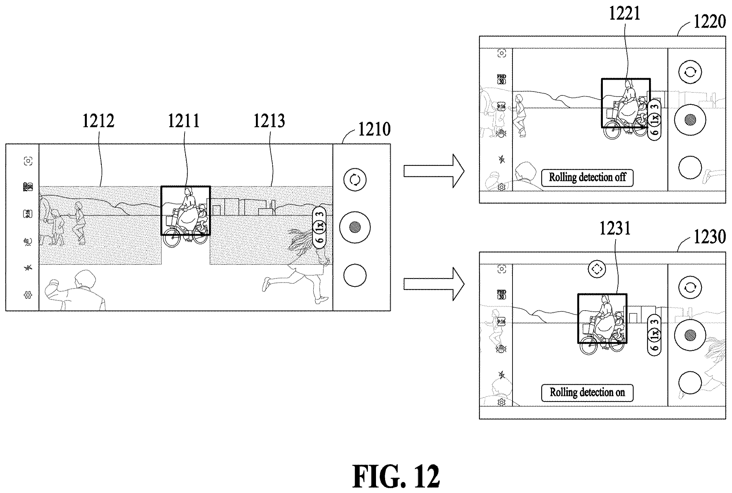

FIG. 12 is a diagram illustrating an embodiment of automatically adjusting a blank around a subject during rolling in/out left/right in an electronic device according to an embodiment.

Referring to FIG. 12, when a user uses the electronic device rotated horizontally, the user may obtain an image 1210 including a subject 1211 and having a composition with certain ratios of left and right blanks 1212 and 1213. In the case of a user not setting a composition adjustment mode as an automatic mode, when there is a change in the rolling state of the flexible display, a composition of ratios of a subject 1221 to the left blank and the right blank in an image 1220 may not be the same as the composition of the ratios of the subject 1211 to the left and right blanks 1212 and 1213 in the image 1210. However, in an embodiment, in the case of the user setting the composition adjustment mode as an automatic mode, when there is a change in the rolling state of the flexible display, the composition of the ratios of a subject 1231 to the left blank and the right blank in an image 1230 may be the same as the composition of the ratios of the subject 1211 to the left and right blanks 1212 and 1213 in the image 1210.

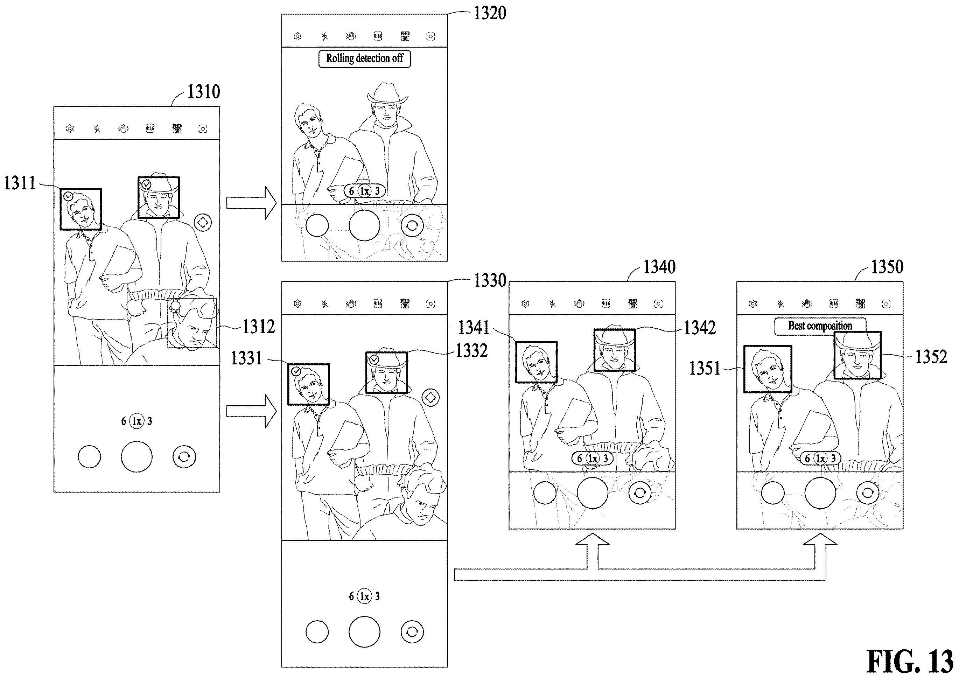

FIG. 13 is a diagram illustrating an embodiment of manually selecting a subject including a plurality of objects in an electronic device according to an embodiment.

Referring to FIG. 13, the electronic device according to an embodiment may provide a user with ROIs related to subjects 1311 and 1312 in an image 1310. The user may or may not select the subjects 1311 and 1312 based on the ROIs. Based on the ROIs, the electronic device may designate a blank around subjects including the subjects 1331 and 1332 in the image 1330. In an embodiment, the subject may be obtained by the user selecting a subject from among a plurality of objects detected and provided by a processor. In the case of the user not setting a composition adjustment mode as an automatic mode, when there is a change in the rolling state of the flexible display, a composition of ratios of a plurality of subjects to the left blanks and the right blanks in an image 1320 may not be the same as a composition of the ratios of the subjects 1311 and 1312 to the left blanks and the right blanks in the image 1310. However, in an embodiment, in the case of the user setting the composition adjustment mode as an automatic mode, when there is a change in the rolling state of the flexible display, a composition of ratios of subjects 1341 and 1342 to the left blanks and the right blanks in the image 1340 may be the same as a composition of ratios of the subjects 1331 and 1332 to the left blanks and the right blanks in an image 1330. In an embodiment, not similar to the image 1330, the electronic device may control the blank size of the image based on a predefined blank composition. For example, the electronic device may magnify a composition to an extent enough for subjects 1351 and 1352, which are selected, to be easily seen, as in the composition of ratios of the subjects 1351 and 1352 to the left blanks and the right blanks in an image 1350, and may recognize blanks and re-adjust the composition such that the blank sizes of the obtained image may be controlled.

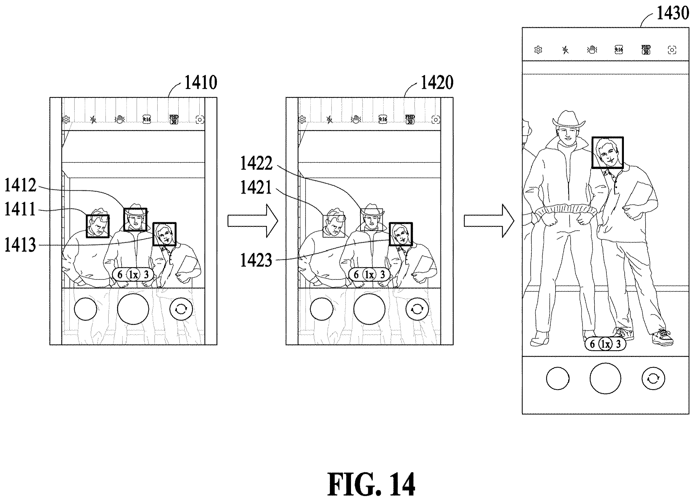

FIG. 14 is a diagram illustrating an embodiment of automatically selecting a plurality of subjects and automatically selecting a blank around the plurality of subjects in an electronic device according to an embodiment.

Referring to FIG. 14, in an image 1410, the electronic device according to an embodiment may provide a user with ROIs related to subjects 1411, 1412, and 1413. The user may or may not select the subjects 1411, 1412, and 1413 based on the ROIs. In an embodiment, in an image 1420, the electronic device may recognize a subject 1423 as most visible among subjects 1421, 1422, and 1423 and provide the ROI related to the subject 1423 to the user. Then, the user may determine a main subject based on the ROI. In an embodiment, the electronic device may control the blank size of an image based on a predefined blank composition. For example, in an image 1430, the electronic device may control the blank size of the obtained image through a method of adjusting magnification to a composition in which the main subject 1423 is most visible. In an embodiment, a method of automatically selecting a main subject may be a method of selecting a main subject from among subjects based on at least one of a distance of a subject from the electronic device and an area of a subject. For example, a method of automatically selecting a main subject from among the subjects 1411, 1412, and 1413 may be a method of recognizing the closest subject and selecting the closest subject as a main subject. For example, the method of automatically selecting the main subject from among the objects 1411, 1412, and 1413 may be a method of recognizing a subject occupying the greatest area and selecting the subject as a main object. For example, the method of automatically selecting the main subject from among the objects 1411, 1412, and 1413 may be a method of recognizing a subject whose eyes, nose, and mouth look most visible and selecting the subject as a main subject. However, embodiments in the present disclosure are not limited to the embodiments described above.

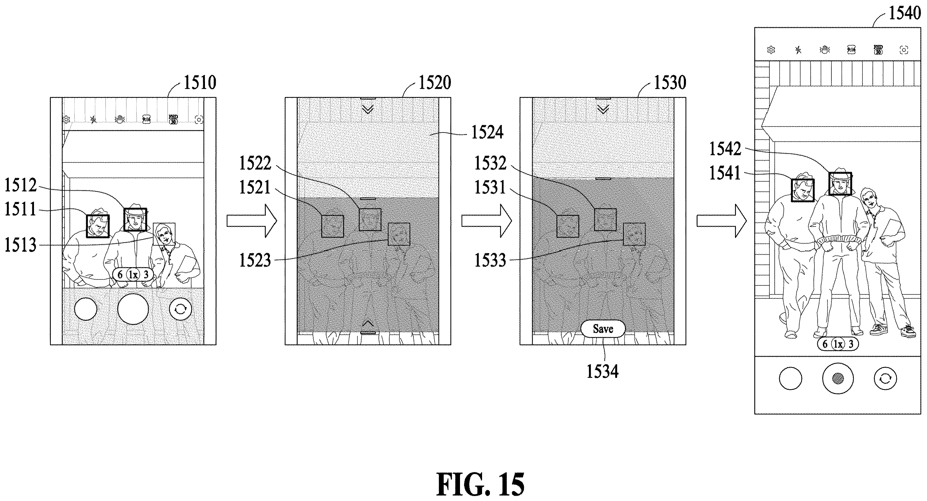

FIG. 15 is a diagram illustrating an embodiment of manually selecting subjects and manually selecting blanks around the subjects in an electronic device according to an embodiment.

Referring to FIG. 15, in an image 1510, the electronic device according to an embodiment may provide a user with ROIs related to subjects 1511, 1512, and 1513. The user may or may not select the subjects 1511, 1512, and 1513 based on the ROIs. In an embodiment, the user may adjust an upper blank 1524 based on the subjects 1521 and 1522 selected by the user in an image 1520 through the electronic device. In an embodiment, for example, when the user sets the range of the upper blank 1524 in an image 1530, the user may save the set range of the upper blank 1524 through a save button 1534. In an embodiment, in the case of the user saving the range of the upper blank 1524 through the save button 1534, when the flexible display is rolled out, the user may obtain an image, such as an image 1540, including the subjects with the upper blank 1524 maintained.

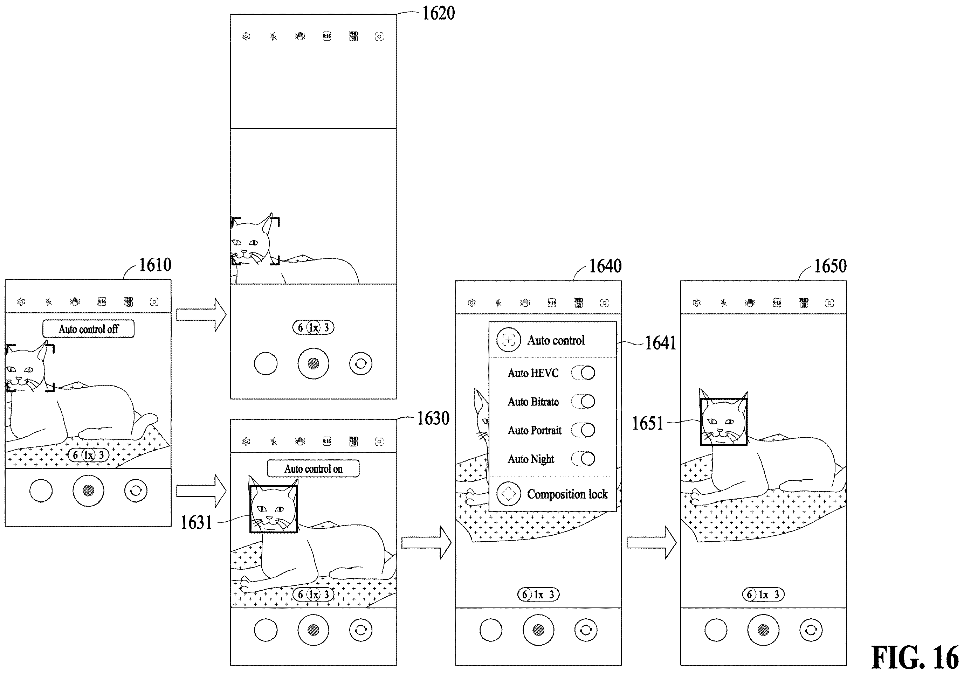

FIG. 16 is a diagram illustrating an embodiment of controlling an obtained image based on the file size, resolution, focus, and illuminance of the obtained image in an electronic device according to an embodiment.

Referring to FIG. 16, the electronic device according to an embodiment may provide a function of controlling an image based on at least one of the file size, resolution, focus, and illuminance of the image. In an image 1610 including a subject, when there is a change in the rolling state of the flexible display of the electronic device without using an automatic shooting composition adjustment function, a composition of the subject may change in the image 1610, as in an image 1620 including a subject. However, in an embodiment, when an image 1630 including a subject 1631 is obtained by using the automatic shooting composition adjustment function, the electronic device may maintain the same composition of the subject 1631 as the composition of the subject in the image 1610 despite the change in the rolling state of the flexible display. In an embodiment, the electronic device may automatically switch images at a ratio optimal for shooting in a folded state. In an embodiment, the electronic device may further provide a function of controlling the obtained image based the file size of the obtained image, resolution of the obtained image, focus of the obtained image, and illumination of the obtained image. For example, through an image control window 1641 in an image 1640, the electronic device may provide an auto high efficiency video coding (HEVC) function that automatically compresses an obtained image according to a shooting environment without deterioration in image quality, a storage space of the user's electronic device, and a memory used by the electronic device. For example, the electronic device may provide an auto bitrate function that reflects an optimal bitrate output to provide optimal picture quality for each resolution. For example, the electronic device may provide an auto effect function that applies an out-focus function to an image other than a subject. For example, the electronic device may provide an auto night function for switching an image acquisition mode to a night shooting mode when shooting continues for a predetermined period of time or longer under a predetermined level of illumination. In an embodiment, the electronic device may switch lenses to change a screen composition at a ratio optimal for a folded state or control the blank size of an obtained image based on a predefined blank composition. However, embodiments in the present disclosure are not limited to the specific embodiments described herein.

## Claims

1. An electronic device comprising:
a camera module (180) configured to obtain an image with respect to a subject;
a processor (120);
at least one memory (130) configured to store instructions executable by the processor (120); and
a flexible display module (160) configured to expand or contract a screen on which the image is output according to a rolling state of a display (230),
wherein, in response to the instructions being executed by the processor (120), the processor is configured to:
determine (305; 405) whether there is a change in the rolling state;
when there is the change in the rolling state and a current image composition adjustment mode is a manual mode, receive (310), from a user, an input about selection for image composition adjustment;
when the current image composition adjustment mode is an automatic mode, detect a blank based on the subject and adjust a composition of the subject based on the blank; and
control (320) a blank size of the obtained image based on the selection in the manual mode or the adjusted composition of the subject in the automatic mode.

2. The electronic device of claim 1, wherein, when the current image composition adjustment mode is the automatic mode, the processor (120) is configured to control the blank size of the obtained image by adjusting a lens zoom ratio of the camera module (180).

3. The electronic device of claim 2, wherein, when the current image composition adjustment mode is the automatic mode, the processor (120) is configured to detect the subject before the change in the rolling state and adjust the lens zoom ratio of the camera module (180) after the change in the rolling state based on a composition of the subject before the change in the rolling state.

4. The electronic device of claim 2, wherein, when the current image composition adjustment mode is the automatic mode, the processor (120) is configured to detect a ratio of the subject and a ratio of a blank before the change in the rolling state and adjust the lens zoom ratio of the camera module (180) after the change in the rolling state based on the ratio of the subject and the ratio of the blank before the change in the rolling state.

5. The electronic device of any one of claims 1-4, wherein, when the current image composition adjustment mode is the automatic mode, the processor (120) is configured to control the blank size of the obtained image by changing a lens of the camera module (180).

6. The electronic device of any one of claims 1-5, wherein, when the current image composition adjustment mode is the manual mode, the processor (120) is configured to control the blank size of the obtained image based on a blank area selected by the user.

7. The electronic device of claim 6, wherein the blank area selected by the user is at least one of a blank area selected by the user in a predefined form, a blank area detected and provided by the processor (120), and a blank area selected by the user in a free form.

8. The electronic device of claim 7, wherein the blank area selected by the user in the predefined form is at least one of an upper blank of the subject, a lower blank of the subject, a left blank of the subject, and a right blank of the subject.

9. The electronic device of any one of claims 1-8, wherein the processor (120) is configured to control the blank size of the obtained image based on a predefined blank composition.

10. The electronic device of any one of claims 1-9, wherein the processor (120) is further configured to provide a function of controlling the obtained image based on at least one of a file size of the obtained image, resolution of the obtained image, focus of the obtained image, and illumination of the obtained image.

11. The electronic device of any one of claims 1-10, wherein the subject is obtained by a user selecting a subject of a plurality of objects detected and provided by the processor (120).

12. The electronic device of any one of claims 1-11, wherein the subject is obtained by the processor (120) selecting a subject of a plurality of objects.

13. The electronic device of claim 12, wherein the processor (120) is configured to select the subject of the plurality of objects based on at least one of a distance of the subject from the electronic device and an area of the subject.

14. The electronic device of any one of claims 1-3, wherein the processor (120) is further configured to delete a background area other than the subject.

15. A control method of controlling an electronic device for controlling a shooting composition, the control method comprising:
operations of determining (305) whether there is a change in a rolling state of the electronic device;
operations of, upon the change in the rolling state, receiving (310) an input about selection for image composition adjustment from a user when a current image composition adjustment mode is a manual mode, and detecting a blank based on a subject and adjusting a composition of the subject based on the blank when the current image composition adjustment mode is an automatic mode; and
operations of controlling (320) a blank size of an obtained image based on the selection in the manual mode or the adjusted composition of the subject in the automatic mode.
